# EUROPEAN PATENT APPLICATION

(11) **EP 4 276 304 A1**
(43) Date of publication of application: **15.11.2023**
(21) Application number: 21917782.1
(22) Date of filing: 30.12.2021
(51) Int. Cl.: F03D 9/32, F03D 3/04, F03D 9/11

(54) **WIND POWER GENERATOR INSTALLABLE ON MOVING BODY**

(30) Priority: 05.01.2021 JP 2021000623
(71) Applicant: Topwind Co., Ltd., Tokyo 158-0085 (JP)
(72) Inventor: ANDO shigeru, Kai-shi, Yamanashi 400-0107 (JP)
(74) Representative: Daub, Thomas
(86) International application number: PCT/JP2021/049030
(87) International publication number: WO 2022/149563

(57) **Abstract**

[Problem] To safely and efficiently generate power in both a state in which a device is installed on a moving body and a state in which the moving body is stopped. [Solution] A wind power generator includes a wind power generation mechanism including (A) to (F) that follow and a support mechanism including (G) to (H) that follow. The wind power generation mechanism includes (A) a wind collector, (B) a windmill with a plurality of blades, (C) a windmill rotation shaft, and (D) a generator. (E) The (A) wind collector is formed to surround an outer circumference of the blades. (F) The generator is directly connected to the windmill rotation shaft. The support mechanism includes (G) a mount, and (H) an attitude control means. The wind power generator installed in a stationary state enables to generate power, or the wind power generator fixedly installed on a moving body enables to generate power. The wind power generator has an integrated type wind power generation mechanism 13 in which the wind power generation mechanism detachably connects the rear end portion of the vertical axis type wind power generation mechanism and the lower end portion of the horizontal axis type wind power generation mechanism, and the vertical axis type wind power generation mechanism 11 and the horizontal type wind power generation mechanism are detachably integrated.

## Description

### TECHNICAL FIELD

The present invention relates to a small-sized wind power generator, and more particularly to a wind power generator in which a device capable of increasing a wind speed is installed on an outer circumference portion of a windmill of the wind power generator installable on a moving body so as to increase utilization of wind to obtain greater output.

### BACKGROUND ART

### 1. Types of Wind Power Generators

Wind can be said to be a form of solar energy that has changed on Earth. A method of using this wind energy is based on converting it into rotational torque of mechanical movement by a windmill and extracting it. Although this rotational torque rotates the generator to generate power, in thermal power generation and hydro power generation, turbines rotate at high speed inside a closed container, but in wind power generation, the wind turbine receives the wind and rotates slowly bare in the atmosphere.

There are various types of wind power generators. There are propeller type, multi-blade type, Darrieus type, Savonius type, and the like according to a shape of a blade. Windmills are broadly classified into horizontal axis type windmills and vertical axis type windmills, depending on whether a rotation shaft of the windmill is placed horizontally or vertically. The vertical axis type windmill can be said to be characterized by the fact that it does not require a directional control mechanism that makes a rotating surface of the windmill follow a wind direction and that a heavy generator can be placed close to the ground.

### (Horizontal Axis Type Windmill)

### (A) Propeller Type

The propeller type is called a horizontal axis type windmill because a rotation shaft of blades is horizontal, but the blades have the same cross section as a propeller of an airplane and rotate at high speed. Hydrodynamically speaking, the fewer the number of blades in a windmill, the faster it rotates. Some windmills have one or two blades to rotate at high speed, but a three blade type, which is generally well-balanced, is overwhelmingly used. Five or six blade types are sometimes used to increase rotational torque rather than rotational speed.

The propeller type has excellent characteristics for high-speed rotation, but on the other hand, there are problems such as loud noise, loss of efficiency due to swinging motion, and slightly high wind speed (3 m/s to 4 m/s) at the start of power generation. However, propeller type windmills are the most popular wind power generators, and are widely used from micro windmills to large windmills.

### (B) Multi-blade Type Windmill

A multi-blade type windmill has a large number of blades (for example, about 20 blades), and this windmill has a large number of blades, so the number of rotation is low, but torque is relatively large. The multi-blade type windmill has strong rotational torque, is quiet, can be easily installed, and can be easily repaired, so it is also used as a power source for small and medium pumping water.

### (Vertical Axis Type Windmill)

### (C) Savonius Type Windmill

A Savonius type windmill is a representative of the vertical axis type windmill. It consists of two semi-cylindrical blades, and the left and right blades are staggered and combined in the circumferential direction, leaving some overlapping portions. Therefore, by allowing the wind that passes between two buckets (half-divided cylinders) to flow into back of a bucket on an opposite side, it becomes a force that suppresses a pushing action in a rotation direction and resistance of headwind, increasing rotation efficiency. This windmill differs greatly in that it mainly uses "drag" unlike the propeller type, which uses "lift" of the wind. Therefore, a peripheral speed ratio is approximately 1, the rotational speed is low, the sound is quiet, and rotational torque is relatively large. It is characterized by being able to rotate regardless of a direction of the wind.

### (D) Darrieus windmill

There is also a Darrieus type windmill as a vertical axis type windmill. Two or three blades are used, and unlike the Savonius type that uses drag, it is a lift type, so it has the characteristic that the number of rotation is very large. In addition, although a rudder is unnecessary because it is irrelevant to a direction of the wind, there is a problem that it is difficult to start rotation by itself because rotational torque (starting torque) obtained from the wind in a stopped state is extremely small. Therefore, various ideas have been tried, such as starting with a motor or combining with a Savonius type windmill to improve starting performance.

### (E) Cross-flow Windmill

It is a windmill that has a large number of elongated curved blades provided at equal intervals on upper and lower disc outer peripheral edges at appropriate angles and rotates in one direction while external wind flows through an internal cavity through gaps in the blades and is discharged to the outside through gaps in the blades on an opposite side (downwind). It is omnidirectional to the wind and rotates with wind from all directions. When the wind comes from the front, the wind on the left half acts effectively in a direction of rotating the windmill, but the wind on the right half acts as resistance to a rotational movement, and thus it has a characteristic of large starting torque, but a rotational speed does not increase. Since the rotation speed is low, the rotation torque is high, and the noise is extremely quiet, so it is widely used for blowing air such as air conditioners.

### 2. Which Windmill is suitable for Wind Power Generation

A propeller-type windmill has a low torque coefficient, but a high power coefficient and a high peripheral speed ratio, so it is often used for wind power generation. In a wind power generation system, a windmill with a high efficiency, that is, a high power coefficient is desired because loss in a process of energy conversion by a windmill from natural wind to a mechanical rotation force is the largest. Another advantage is that a speed increasing gear ratio can be reduced compared to a drag type windmill. For this reason, propeller type and Darrieus type windmills are overwhelmingly used in wind power generation.

On the other hand, in small windmills as independent power sources, in addition to propeller type windmills, drag type Savonius type windmills are sometimes used. In this case, the windmill's original power coefficient is low, and the generator is driven by increasing the speed with a fairly large speed increase ratio with gears and belts, so additional loss will be added. Therefore, the efficiency of the system as a whole would be extremely low, making it unsuitable for wind power generation.

### 3. Mechanism of Wind Power Generation

The power of the wind rotates the windmill, and the rotational movement is transmitted to the generator to generate electricity.

Wind energy is proportional to an area that receives the wind, a density of the air, and a cube of a wind speed. When the area that receives the wind and the density of the air are constant, doubling the wind speed will increase the wind energy by eight times.

Therefore, the windmill turns in a direction the wind is blowing, and is designed to receive the maximum force of the wind at all times.

When the wind is extremely strong due to a typhoon or the like, a variable pitch works so that the windmill does not break, and thus the windmill does not rotate even when it receives the wind.

In this way, wind power generation is highly efficient as it can convert about 40% of the kinetic energy of the wind into electrical energy.

Both horizontal axis type windmills (propeller type) and vertical axis type windmills have types that use lift force and types that use drag force.

In the lift type, the lift generated by a combined speed is used to generate rotational torque around the rotation of the windmill.

### (Horizontal Axis Type Windmill)

Horizontal axis type windmills are classified into an upwind system in which a rotating surface of a rotor is located on a windward side of a tower and a downwind system in which it is located on a leeward side.

The upwind system has the feature that the rotor is located on the windward side of the tower, so it is not affected by wind turbulence caused by the tower, so the upwind system is the mainstream in current windmills.

On the other hand, the downwind system has the feature that it does not require a yaw drive device to automatically match a direction of a propeller to a direction of the wind, so the downwind system is often applied to small windmills, but in recent years, downwind system windmills for large machines have also been developed.

The following five are the features of the horizontal axis type windmill.
(1) Efficiency is high and enlargement is easy.
(2) Horizontal axis type windmills are suitable for power generation.
(3) In the case of the upwind system, it is necessary to orient the rotating surface of the windmill toward the wind (yaw control).
(4) Heavy objects (generator, transmission mechanism, control mechanism, and the like) must be installed inside a nacelle.
(5) The structure is relatively simple.

### (Vertical Axis Type Windmill)

The following five are the features of the vertical axis type windmill.
(1) Wind in any direction can be used and there is no dependency on wind direction.
(2) Heavy objects can be installed on the ground.
(3) It is easier to manufacture blades than the propeller type.
(4) Large rotational torque is required during self-starting, making it difficult to control the rotational speed.
(5) Compared to the horizontal axis type windmill, the efficiency is inferior and the installation area is large.

As described above, the current small wind power generators have a small amount of power and are treated as teaching materials and monuments, and are not widely used as generators.

For the past ten years, the inventor has devised a small wind power generator for the purpose of high safety, small area, and high efficiency power generation, and has manufactured many prototypes in collaboration with the University of the Ryukyus and the China University of Science and Technology (Taiwan).

As the importance of a decarbonized society is recognized and ESG investment that emphasizes environmental initiatives is spreading worldwide, the Japanese government has also declared a goal of reducing greenhouse gas emissions to virtually zero by 2050.

In 2018, carbon dioxide emissions from energy and combustion accounted for the majority of global greenhouse gases, amounting to 33.5 billion tons.

Among them, the power generation sector accounted for the largest amount of emissions, about 40%, followed by the transportation sector, which accounted for about 25%. Emissions from the automobile sector were almost the same as the 6.2 billion tons from the manufacturing sector.

For wind power generators as well, new ideas that can be used in a variety of fields are essential in order to respond to social changes such as decarbonization.

The following patent literatures are the invention of the present inventor, and relates to a wind power generator that automatically opens and closes blades by automatic control using suction force and centrifugal force without using a sensor, a brake, or the like.

In other words, the basic shape is from a sphere to a cylinder, and a central axis and each blade are connected with weights, springs, hydraulic cylinders, gas cylinders, or the like, and when there is no wind, a tip of the blade is tilted inside the windmill due to an attractive force of the weight, spring, magnet, or the like., and becomes a shape that easily receives the wind. When a windmill rotation speed increases due to strong wind, the tip of the blade returns to the outside due to a centrifugal force of rotation (it becomes a spherical shape, and the windmill becomes a shape that does not receive wind), and then when the rotation speed decreases, the windmill takes on the shape that receives the wind again due to the attractive force, and the windmill rotates safely and continues to generate power even in strong winds.

### CITATION LIST

### PATENT LITERATURE

Patent Literature 1: JP3172061 Y_Registed Utility Model Publication
Patent Literature 2: JP3204736Y_Registed Utility Model Publication
Patent Literature 3: WO2019/153103A1
Patent Literature 4: JP2020-103982

### SUMMARY OF THE INVENTION

### PROBLEM TO BE SOLVED BY THE INVENTION

### (Need for Miniaturization)

The mega-solar power generation and large-scale wind generators currently in operation are unstable due to their output being affected by the weather, making it difficult to connect to the grid, and in addition, when the power generation environment is prepared, power generation will be concentrated, so output restrictions and the like will be implemented.

In addition to high construction and maintenance costs of long-distance power grids, transmission and transformation losses, they have the risk of large-scale blackouts.

Therefore, it is meaningful to develop a highly efficient small wind generator that can generate power 24 hours a day as a regionally distributed power generation / independent power source when the environment is right.

### (Wind Receiving Area)

Wind power generators, especially vertical axis type wind power generators, have the advantage of being able to generate power regardless of the direction of the wind, making less noise, and being able to be made smaller, so they have the potential to become the favorite of small wind power generators.

However, it also has the disadvantage that a wind receiving portion of the windmill is small and an amount of power generation is small.

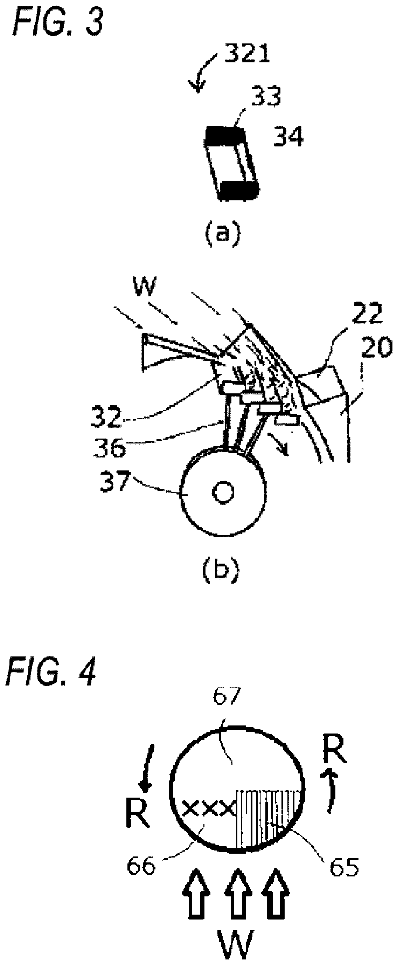

In the vertical axis type windmill, in terms of the area receiving favorable winds, only one-fourth (90 degrees) of the windmill receives the favorable winds. Similarly, the area receiving headwinds is also one-fourth (90 degrees), and the rear part does not receive wind (see FIG. 4).

Therefore, there is a problem that it is difficult to rotate the windmill at high speed, which is indispensable for power generation. For this countermeasure, it is essential to expand the area of the vertical axis type wind generator that receives the favorable winds and how to achieve high-speed rotation of the windmill.

### (Countermeasures against No Wind)

The biggest issue with wind power generators is that the blades cannot rotate without the wind, making it impossible to generate power. The traditional solution was to place the wind power generator in a place with good wind conditions, but this is not a perfect solution.

The biggest challenge is to ensure that the wind is received and power generation is possible. The solution to this biggest challenge is to attach the windmill to a moving body.

However, when attached to a moving body in this way, there is a problem that when the horizontal axis type wind power generator is selected, power can be generated without any problem while the moving body is moving, but wind power generation by the horizontal axis type wind power generator cannot be efficiently performed when the moving body is stopped.

In such cases, vertical axis type windmills are more efficient because the windmills can easily rotate from any wind direction.

### (Safety)

Ensuring safety is also the most important issue. Particularly in the case of small wind power generators, it is important to prevent accidents such as getting fingers caught in the wind power generator and to ensure a high degree of safety so that the wind power generator can be touched by hand.

As described above, an object of the present invention is to provide a wind power generator that enables to generate power safely and efficiently both when it is installed on a moving body and when the moving body is stopped.

### MEANS FOR SOLVING THE PROBLEM

(1) A wind power generator according to a first embodiment of the present invention for achieving the above object provides,
   a wind power generator that includes a vertical axis type wind power generation mechanism including the following (A) to (D) and a support mechanism including the following (G) to (H), in which the vertical axis type wind power generation mechanism includes (A) a wind collector, (B) a windmill with a plurality of blades, (C) a windmill rotation shaft, and (D) a generator, in which the wind collector is formed to surround an outer circumference of the blades, in which the generator is directly connected to the windmill rotation shaft, and in which the support mechanism includes (G) a mount, and (H) an attitude control means,
   in which the wind power generator installed in a stationary state enables to generate power, or the wind power generator fixedly installed on a moving body enables to generate power, and
   in which the wind collector is formed from a plurality of continuous wind collecting ducts that surround an outer circumference of the windmill, and the windmill with the plurality of blades is a vertical axis type windmill.
   With this configuration, the entire windmill is covered, the wind receiving area is increased, and the headwind is blocked, so that only the favorable wind hits the blade. As a result, wind power is increased and wind force is enhanced, and further the headwind is blocked.
(2) A wind power generator according to the first embodiment of the present invention for achieving the above object provides a wind power generator that includes a wind power generation mechanism including the following (A) to (D) and a support mechanism including the following (G) to (H),
   in which the wind power generation mechanism includes,
      (A) a wind collector,
      (B) a windmill with a plurality of blades,
      (C) a windmill rotation shaft, and
      (D) a generator
   in which the wind power generation mechanism is a vertical axis type wind power generation mechanism,
   in which the wind collector is formed from da plurality of wind collecting ducts that surround an outer circumference of the windmill,
   in which the wind collecting duct is formed such that a wind discharged from an outlet of the wind collecting duct always hits the blade of the windmill as a favorable wind, and is formed such that an unfavorable wind for the blade is blocked by a duct wall of the wind collecting duct in order not to flow into the windmill,
   in which the generator is directly connected to the windmill rotation shaft,
   in which the support mechanism includes,
      (G) a mount, and
      (H) an attitude control means,
   in which the attitude control means is an attitude control means that allows an orientation adjustment of the windmill and the wind collector in at least a vertical direction out of horizontal and vertical directions, and
   in which the wind power generator installed in a stationary state enables to generate power, or the wind power generator fixedly installed on a moving body enables to generate power.
   With this configuration, the plurality of wind collecting ducts can block the headwind hitting the windmill, expand the wind receiving area, and further increase the power of the wind hitting the blades, and thus the windmill rotation speed can be increased.
(3) The wind power generator may be the wind power generator according to (1) where the wind collecting duct is formed such that an inner diameter of the wind collecting duct decreases from an intake of the wind collecting duct to the outlet of the wind collecting duct.
   With this configuration, the wind collecting ducts can further increase the power of the wind hitting the blades and increase the windmill rotation speed.
(4) In the wind power generator, the blade may be a blade having a winglet and an inner blade.
   This configuration can reduce the generation of wingtip vortices and achieve efficient rotation and noise prevention.
(5) Further, in the wind power generator, a rod-shaped arm connecting the windmill rotation shaft and the blade may be shaped like a rotating blade, or a rotating blade-shaped member may be formed on the rod-shaped arm that connects the windmill rotation shaft and the blade.
   This configuration makes it possible to easily receive wind, utilize the effects of drag and lift, and increase the number of rotations of the blades.
(6) In the wind power generator, the vertical axis type windmill may be installed in a vertical connection. This configuration can increase an amount of power generation.
(7) A wind power generator of the present invention provides a wind power generator that includes a horizontal axis type wind power generation mechanism including the following (A) to (D) and a support mechanism including the following (G) to (H), where the horizontal axis type wind power generation mechanism includes (A) a wind collector, (B) a windmill with a plurality of blades, (C) a windmill rotation shaft, and (D) a generator,
   in which the wind collector is formed to surround an outer circumference of the blades, the generator is directly connected to the windmill rotation shaft, and the support mechanism includes (G) a mount, and (H) an attitude control means,
   in which the wind power generator installed in a stationary state enables to generate power, or the wind power generator fixedly installed on a moving body enables to generate power,
   in which the wind collector is a bell mouth duct,
   in which the windmill with the plurality of blades is a multi-blade fan horizontal axis type windmill, and
   in which the generator is directly connected to the windmill rotation shaft of the horizontal axis type wind power generation mechanism.
   This configuration made it possible to reduce the size of the windmill and made it possible to directly connect the generator and the windmill rotation shaft.
(8) In the wind power generator, in the (B) windmill having the plurality of blades, the blades may be formed such that the blades may overlap each other to cover almost all of a wind receiving portion when the windmill is viewed from a windmill rotation shaft direction, and there is almost no gap between the blades and the bell mouth duct when the windmill is viewed from the windmill rotation shaft direction, , in order that substantially an entire area of the wind receiving portion of the horizontal axis type windmill may be occupied by the blades.
   With this configuration, it is possible to increase the wind receiving area and maximize the wind receiving, and almost all of the wind receiving portion of the horizontal axis type windmill becomes a blade fan. Therefore, the most efficient wind reception is possible, and thus high-speed rotation can be achieved.
(9) Further, in the wind power generator, the windmill having the plurality of blades has a spinner at a center of the blades, and the wind collector has a guard at the wind collecting port, and further it may be a wind power generator in which the wind power generation mechanism is provided with a vertical stabilizer.
   With this configuration, the horizontal axis type windmill can face the wind direction, preventing a finger from getting caught in the windmill and preventing a bird strike.
(10) Further, in the wind power generator, a horizontal axis type wind power generation mechanism 12 may be installed so as to be connected horizontally.
   This configuration can increase the amount of power generation.
(11) The wind power generator may be,
   the wind power generator according to (1) which further includes a horizontal axis type wind power generation mechanism in which a wind collector is the bell mouth duct and a windmill is a multi-blade fan horizontal axis type windmill.
   This configuration enables the wind power generator not only when the moving body is traveling but also when it is stopped.
(12) The wind power generator may be,
   the wind power generator according to (1), where a rear end portion of the horizontal axis type wind power generation mechanism according to claim 3 is detachably connected to a lower end portion of the vertical axis type wind power generation mechanism.
   This configuration enables the wind power generator not only when the moving body is traveling but also when it is stopped.
(13) The wind power generator may be the wind power generator according to (3) where the orientation adjustment is enabled by the attitude control means according to (1) such that the horizontal axis type wind power generation mechanism faces a wind direction when the wind power generator is installed on a moving body and the moving body travels, and the vertical axis type wind power generation mechanism is vertically oriented with respect to the wind direction when the moving body is stopped.
   This configuration enables the wind power generator not only when the moving body is traveling but also when it is stopped, and facilitates switching between them.
(14) The wind power generator may be the wind power generator according to (5) which further includes a charge control mechanism for charging a battery mounted on the moving body with electricity generated by the wind power generator.
   With this configuration, not only a storage battery provided in the moving body but also a spare storage battery can be charged, and the spare storage battery can be not only used at home but also transferred to other moving bodies.
(15) It may be a wind power generator where the vertical axis type wind power generation mechanism is the vertical axis type wind power generation mechanism according to claim 2, and
   the horizontal axis type wind power generation mechanism is the horizontal axis type wind power generation mechanism according to claim 7, and
   the wind power generation mechanism is an integrated type wind power generation mechanism in which a rear end portion of the horizontal axis type wind power generation mechanism and a lower end portion of the vertical axis type wind power generation mechanism are detachably connected and integrated, and the attitude control means is an attitude control means capable of adjusting a direction of the integrated type wind power generation mechanism vertically and horizontally.
   With this configuration, the number of parts can be reduced, the wind power generator can be made smaller and lighter, and the angle of the integrated type windmill can be arbitrarily changed to achieve the most efficient power generation.
(16) It may be the wind power generator according to (3) where in terms of width and length of the blades of the multi-blade fan horizontal axis type windmill, the blades are formed to have a blade width such that the blades overlap each other and cover almost all of the wind receiving portion when the windmill is viewed from a windmill rotation shaft direction, and the length of the blade is formed such that there is almost no gap between a tip of the blade and the bell mouth duct when the windmill is viewed from the windmill rotation shaft direction.
   This configuration allows for the most efficient wind reception and high speed rotation. Noise can be reduced by the short blade diameter and the narrow gap between the blade and the bell mouth duct.
(17) The wind power generator may be,
   the wind power generator according to (4) where a rotating blade-shaped member is formed on a rod-shaped arm that connects the windmill rotation shaft and the blades of the vertical axis type wind power generation mechanism according to (1).
   With this configuration, the total amount of wind that has passed through the horizontal axis type wind power generation mechanism can pass through the inside of the vertical axis type wind power generation mechanism, and a spoke blade 38 provided in the vertical axis type wind power generation mechanism can be rotated to generate power.
(18) The wind power generator may be,
   the wind power generator according to (3) or (4), where a protective cover is provided at a wind collecting port of the wind collector to prevent a finger from getting caught and to prevent a bird strike.
   This configuration can prevent a finger from getting caught and can also prevent a bird strike.
(19) Further, it may be a wind power generator characterized in that either a gas damper, a gas spring, or an oil damper is attached between the mount and the integrated type wind power generation mechanism.
   With this configuration, it is possible to automatically switch between the vertical type wind power generation mechanism and the horizontal type wind power generation mechanism according to the strength of the wind force.

### ADVANTAGEOUS EFFECTS OF INVENTION

The wind power generator of the present invention can solve the fatal flaw of wind power generators that "power cannot be generated unless the wind blows".

In other words, when the integrated type wind power generator is installed on a ship or the like, when moving to fishing grounds, the horizontal axis type windmill can reliably generate power and charge the storage battery or the like, so that the fuel used for fishing lights or the like can be reduced.

In addition, while the ship is stopped, the vertical axis type windmill can be used to charge the storage battery or the like, and to be used as a power source while the ship is in berth.

Moreover, since the wind power generator of the present invention is small and lightweight, it is possible to install the wind power generator on a vehicle (including railways) such as a long-distance truck in which about two windmills are disposed on the windshield above the driver's seat when attaching it to , and thus more efficient power generation is possible by making the shape of the windshield of an automobile into a shape that facilitates (air blowing to the wind collecting duct) the wind collection of the horizontal axis type windmill.

In particular, it is effective to be used as a power generation source for freezer cars, refrigerator cars, or the like, but it is also possible to attach it to EV cars and fuel cell cars. As a result, it can be expected that the number of storage batteries mounted on a truck or the like will be reduced and that a traveling distance will be extended.

On the other hand, when a wind power generator is mounted on a ship, a truck, or the like, there will be a disadvantage of increased air resistance, but the inertial force associated with traveling can minimize deterioration of fuel consumption.

In addition, as a social situation, an era has arrived in which priority is given to the utilization of natural energy over the disadvantage of increased air resistance.

The wind power generator of the present invention can reduce carbon dioxide emissions not only in the power generation sector but also in the transportation sector by attaching the wind power generator to a moving body in addition to the fixed installation of the related art.

In the vertical axis type windmill of the present invention, there is a limit to the number of rotations of the blades, so the number of rotations of the windmill will not continue to increase endlessly even in a storm. Therefore, a high degree of safety can be ensured by using electromagnetic brakes of a three-phase motor and by using strong materials.

Since a wind collector 20 outside the windmill does not rotate, it has a shape that is safe enough to touch the windmill even when the blades are rotating.

In the horizontal axis type windmill, by shortening the blade diameter of the multi-blade fan, which is originally capable of high-speed rotation, the strength is increased and high safety can be secured. Even in this case, the rotation can be controlled by the electromagnetic brake of the three-phase motor.

Since the bell mouth duct itself does not rotate, and it is safe, but by attaching a protective cover such as a net to the intake of the bell mouth duct, a finger can be prevented from getting caught and a bird strike can be prevented.

In addition, in the case of the integrated type, by installing it sideways (horizontal axis type is parallel to the ground) in the event of a storm, it is an extremely safe shape that prevents storms from entering the vertical axis type windmill.

Since the wind power generator of the present invention has a simple structure with a small number of parts, the manufacturing cost is low, and maintenance is reduced and easy.

### BRIEF DESCRIPTION OF THE DRAWINGS

[FIG. 1] FIG. 1 is a perspective view of an example of a wind power generator according to a first embodiment of the present invention.
[FIG. 2] FIG. 2 is a perspective view of a wind collector of the example of the wind power generator according to the first embodiment of the present invention.
[FIG. 3] FIG. 3(a) is an enlarged perspective view of a blade portion of the wind power generator according to the first embodiment of the present invention, and FIG. 3(b) is a perspective view of a windmill portion of the wind power generator according to the first embodiment of the present invention.
[FIG. 4] FIG. 4 is a reference diagram for illustrating a wind receiving state of a vertical axis type windmill.
[FIG. 5] FIG. 5 is a perspective view of a wind power generator according to a second embodiment of the present invention.
[FIG. 6] FIG. 6 is a cross-sectional explanatory view illustrating a state in which an integrated type wind power generator according to a third embodiment of the present invention is installed horizontally, and showing the inside thereof.
[FIG. 7] FIG. 7 is a plan view of half of the integrated type wind power generator according to the third embodiment of the present invention for illustrating the inside.
[FIG. 8] FIG. 8 is a view illustrating a rear surface of the integrated type wind power generator according to the third embodiment of the present invention.
[FIG. 9] FIG. 9 is a front view of the integrated type wind power generator according to the third embodiment of the present invention.
[FIG. 10] FIG. 10 is a diagram illustrating a state in which the integrated type wind power generator according to the third embodiment of the present invention is installed vertically.

### DESCRIPTION OF THE EMBODIMENTS

Embodiments showing objects, features, and effects of the present invention are described below.

### (1) First Embodiment (Vertical axis type wind power generation mechanism 11)

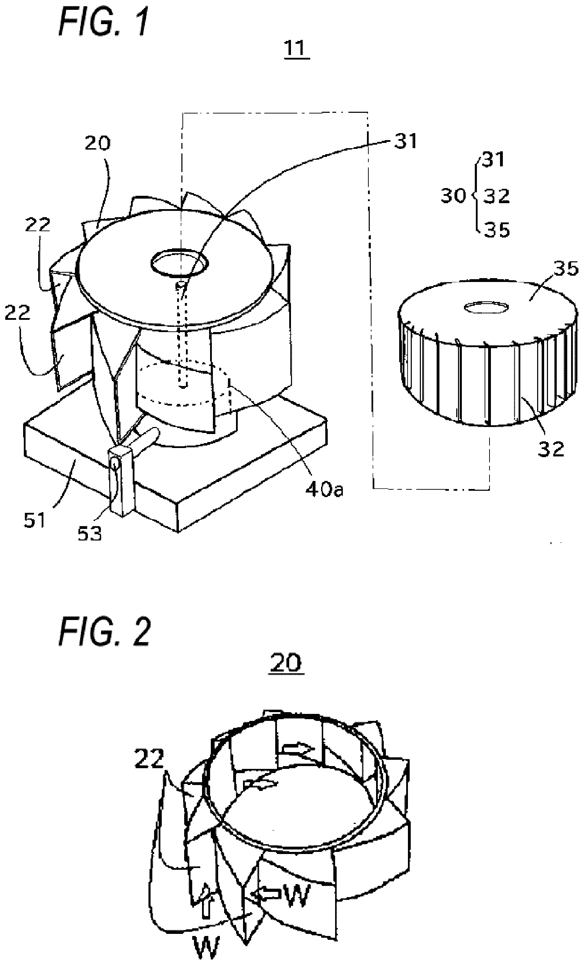

A first embodiment of the present invention will be described below with reference to the accompanying drawings. Hereinafter, in the specification, a wind power generator 1 of the first embodiment may be referred to as a "vertical axis type". FIGs. 1 and 2 illustrate a configuration of a vertical axis type wind power generation mechanism 11 according to the first embodiment of the present invention.

### (Overall Configuration)

FIG. 1 is a perspective view illustrating the vertical axis type wind power generation mechanism 11 according to the first embodiment of the present invention. In FIG. 1, the vertical axis type wind power generation mechanism 11 has a mount 51, a windmill 30, a wind collector 20 that collects wind and accelerates the wind traveling toward a blade 32, and a generator A40a.

As illustrated in FIG. 1, the wind power generator of the first embodiment of the present invention has a shape in which an entire outer periphery of the cross-flow type windmill 30 which is the vertical axis type wind power generation mechanism 11 is surrounded by the wind collector 20.

### (Windmill 30)

In FIG. 1, the windmill 30 is rotatably supported on the mount 51 and connected to an input shaft of the generator 40a, and includes a windmill rotation shaft 31 erected in a direction perpendicular to a traveling direction of the wind, and a plurality of blades 32 which are arranged along a circumference of the windmill rotation shaft 31 and give rotational torque to the windmill rotation shaft 31 by receiving wind.

### (Wind Collector 20)

As illustrated in FIGs. 1 and 2, the entire outer periphery of the wind collector 20 of this example is surrounded by a plurality of wind collecting ducts having a substantially triangular prism shape in appearance. According to this wind collecting duct, winds W flow into the wind collecting duct through intakes of a plurality of wind collecting ducts surrounding an outer periphery of the windmill and flow out to the windmill through outlets of the wind collecting ducts. As illustrated in FIG. 2, a direction of the winds W flowing into the windmill is clockwise when viewed from above, and always hits the blade of the windmill with a favorable wind. An unfavorable wind for the blade of the windmill is blocked by a duct wall of the wind collecting duct so that it does not flow into the windmill.

Moreover, the wind collecting duct of the example of the present invention has a three-dimensional tubular shape in which an intake 22, which is an inlet port of wind, is widened to increase an area for receiving wind and an inner diameter is gradually narrowed toward a tip. Due to this shape, the wind to the windmill 30 is accelerated because the wind collecting duct is formed such that the inner diameter of the wind collecting duct decreases from the intake 22 to the outlet.

The wind collector 20 of the present example allows wind from about 120 degrees to about 180 degrees forward angle to flow to the blades 32 inside the windmill as favorable winds while blocking head wind.

As a result, by using the wind collector 20 of the present example, it is possible to increase a windmill rotation speed by enlarging the wind receiving area, blocking the head wind, and increasing the wind force.

As illustrated in FIGs. 1 and 2, in the wind collector 20 of this example, adjacent wind collecting ducts are partially overlapped and attached so as to cover the entire outer periphery of the windmill 30, making it a three-dimensional shape that maximizes the use of wind. However, adjacent wind collecting ducts may be attached so as to cover the entire outer periphery of the windmill 30 in a state that they are separated from each other without partially overlapping each other.

### (Arm)

In FIG. 1, an arm that connects the windmill rotation shaft 31 and the blade 32 is a disk-shaped arm 35 that fixes upper and lower portions of the blade 32 with a disk in this example. This is because the vertical axis type wind power generation mechanism 11 solves the problem that the number of rotations changes depending on strength of the wind, and a fatigue load at a base of a blade frame is caused by an inertial force.

However, for example, other types of arms can be employed besides disk-shaped arms. For example, as illustrated in FIGs. 3(a) and 3(b), when upper and lower tips of a blade 321 are provided with winglets 33, the blade 321 can be supported by a rod-shaped arm 36 instead of the disk-shaped arm 35.

Further, in another example, the shape of the arm connecting the windmill rotation shaft 31 and the blade may be a rotating blade shape, or, although not illustrated, a rotating blade-shaped spoke blade 38 may be formed on an arm that connects the windmill rotation shaft 31 and the blade.

### (Blade 321)

In FIG. 1, the blades 32 in this example employ a plurality of vertical blades 32. Although a linear shape is adopted in this example, a curved shape may be used.

In this example, the interval between the blades of the windmill 30 is relatively large. As a result, the shape is such that high-speed rotation is possible.

### (Winglet 33)

In the example illustrated in FIGs. 3(a) and 3(b), the upper and lower tips of the blade 321 are the winglets 33. This reduces occurrence of wingtip vortices, achieving efficient rotation and noise prevention. Straight blades of the related art let wind escape from tips, causing wing tip stall. In order to eliminate the wing tip stall, the wing has the winglet 33 with the wing tip bent inward. It has been confirmed by a rotation test that by using the winglet 33 as the blade tip of the cross-flow type windmill 30, the windmill rotation speed is increased by about 25%.

The reason why the winglet shape improves the windmill rotation speed is thought to be that by attaching an inner blade 54 to the winglet 33 at the tip of the blade and the blade 32, the wind can be received most effectively, and the lift force and the drag force can be utilized, so this reduces generation of a wingtip vortex, which is a negative factor.

### (Inner Blade 54)

As illustrated in FIGs. 3(a) and 3(b), by attaching the inner blade 54 to a tip of the blade 32 on a rotation direction (advance) side, it is possible to easily receive the wind and utilize the effects of drag and lift, increasing the rotation speed of the blade 32. That is, it has been confirmed that when the inner blades 54 are attached, the windmill rotation speed is improved by about 20%.

An attachment angle of the inner blades 54 is preferably within a range of 45 degrees to 90 degrees. A rotation test confirmed that the angle in this range was the most effective.

When the vertical axis type windmill of this embodiment is used alone, the windmills can be vertically connected in two or three stages in a comb shape. Since the windmill used in the vertical axis type wind power generation mechanism 11 of the present invention has a wide blade area and a large torque, a plurality of windmills can be vertically connected in a comb shape and connected to one generator. Thereby, the power generation amount can be increased.

### (Generator 40a)

The generator A40a is directly connected to the windmill rotation shaft 31 by a generator support means (not illustrated) at the bottom of the windmill 30. In this example, although the windmill rotation shaft 31 is formed with the same rotating shaft as a rotation shaft of the generator 40a, the windmill rotation shaft 31 may be joined to the rotation shaft of the generator 40a by a shaft coupling.

### (Support Mechanism)

In this example, the support mechanism includes the mount 51 and an attitude control means 53. The attitude of the windmill 30 and the wind collector 20 can be horizontally adjusted by a turntable (not illustrated) provided on the mount 51. An attitude control shaft 53 allows an orientation adjustment of the windmill 30 and the wind collector 20 in a vertical direction. In this specification, the attitude control is that the orientation of the altitude of the windmill and the wind collector is adjusted horizontally and vertically.

### (Operation Effect)

An operation effect of the wind power generator 1 of the first embodiment will be described.

Focusing on the fact that the amount of power generated by wind power is proportional to the cube of the wind speed, by attaching the three-dimensional wind collectors 20 of approximately triangular prism shape around the windmill, the wind hitting the windmill 30 can be accelerated to achieve a significant increase in power output. Applying this wind collector 20 to the vertical axis type wind power generation mechanism 11 to collect the wind and concentrate a wind energy to accelerate the wind, and thus it is possible to improve start-up characteristics, which is a problem of the vertical axis type wind power generation mechanism 11, and to greatly increase the power generation output.

### (2) Second Embodiment (Horizontal Axis Type Wind Power Generation mechanism 12)

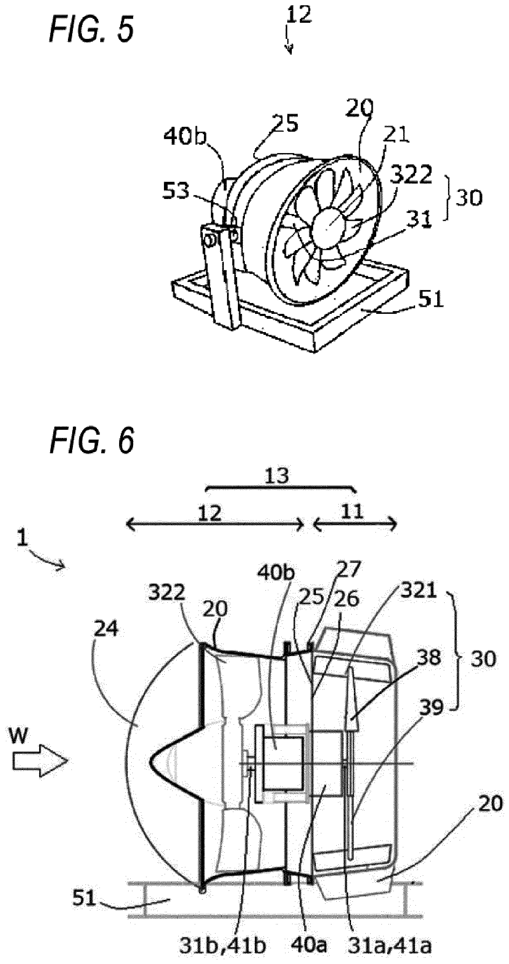

Next, referring to FIG. 5, a horizontal axis type wind power generation mechanism 12 as a second embodiment of the present invention will be described. In the second embodiment, components similar to those in the first embodiment are denoted by the same reference numerals, and detailed descriptions thereof are omitted. Hereinafter, in the specification, the horizontal axis type wind power generation mechanism 12 of the second embodiment may be referred to as "horizontal axis type". The second embodiment differs from the first embodiment in that the horizontal axis type wind power generation mechanism 12 is used as the wind power generation mechanism.

### (Overall Shape)

In FIG. 5, the horizontal axis type wind power generation mechanism 12 of the second embodiment includes the mount 51, the windmill 30, a blade 322, the wind collector 20, and a generator A40b.

### (Wind Collector 20)

In the second embodiment, the wind collector 20 is not particularly limited as long as it can collect wind and direct it to the windmill. In this example, a bell mouth duct is used which facilitates the collection of air.

### (Spinner 21)

In this example, a spinner 21 having a conical shape is attached to a central portion of the multi-blade fan 322. As a result, resistance and turbulence can be reduced, and wind can be collected efficiently.

### (Blade 322)

In this second embodiment, the multi-blade fan 322 is used as the blade 322 inside the bell mouth duct. Generally, a multi-blade fan has a rotation capacity of 6,000 rotations or more, but when used for wind power generation, sufficient power generation is possible even at about 1,000 rotations. The multi-blade fan is usually used for blowing air, but in the case of wind power generation, it is used for receiving wind (reverse pitch), so there is an advantage that noise is small.

Although there is no particular limitation on the number of blades of the multi-blade fan 322, in the demonstration experiment by the present inventor, regarding the number of blades 322, in the comparative verification test of three blades and nine blades, the number of rotations of nine blades was about twice the number of rotations of three blades. As a result, nine blades were used in this example.

The most important thing in the high speed rotation of the windmill is to minimize the wind passing through the inside of the windmill and make the best use of the wind. Since the wind energy received by the windmill is the same, it is important to reduce air losses and improve the efficiency of the wind received.

In this example, the shape of the blade 322 is devised so that the area of the blade 322 that receives the wind is increased and the maximum amount of wind received is possible.

That is, in the horizontal axis type wind power generation mechanism 12 of this embodiment, when viewed from a direction of the windmill rotation shaft, it is preferable that the adjacent blades 322 of the plurality of blades 322 are overlapped with each other so that there is no gap and almost all of the wind receiving portion of the horizontal type windmill is covered, and further, it is preferable to form the blade so that there is almost no gap between the tip of the blade 322 and the bell mouth duct. That is, when viewed from the direction of the windmill rotation shaft, it is preferable that a projected area of the plurality of blades 322 is formed so as to cover almost all of the wind receiving portion of the horizontal axis type windmill. The width and length of the blades of the multi-blade fan horizontal axis type windmill are preferably formed to a blade width such that when the windmill is viewed from the direction of the windmill rotation shaft, the blades overlap each other and cover almost all of the wind receiving portion, and preferably formed to a blade length so that there is almost no gap between the tips of the blades and the bell mouth duct when the windmill is viewed from the direction of the windmill rotation shaft.

### (Double Blade 32)

Multi-blade fans can be coaxially stacked to form a blade structure with two or more continuous blades. Thereby, the power generation amount can be further increased.

### (Generator)

In this embodiment, the windmill rotation shaft 31 is directly connected to the generator 40. Therefore, it is possible to reduce the size of the wind power generator. In this example, although the windmill rotation shaft 31 is formed with the same rotating shaft as a rotation shaft of the generator 40a, the windmill rotation shaft 31 may be joined to the rotation shaft of the generator 40a by a shaft coupling.

### (Stabilizer)

A vertical stabilizer can also be attached to an upper portion of the bell mouth duct to control the direction. By attaching the vertical stabilizer, the horizontal axis type wind power generation mechanism 12 can be made to face a wind direction and generate power efficiently.

### (Protective Cover)

A protective cover such as a net can be attached to a wind collecting port of the bell mouth duct. By attaching the protective cover, a finger can be prevented from getting caught and a bird strike can be prevented.

### (Safety)

The blade 322 preferably has a short diameter. That is, when the diameter of the blade 322 is short, the strength of the blade 322 is increased, and high safety can be ensured. Since a peripheral speed ratio between a root portion and a tip portion of the blade 322 does not change, efficient rotation can be realized even with the blade 322 having a short diameter. Further, it is possible to ensure high safety and achieve high-speed rotation by increasing the strength.

### (Operation)

The most important thing in the high speed rotation of the horizontal axis type wind power generation mechanism 12 is to minimize the wind passing through the inside of the windmill and make the best use of the wind. Since the wind energy received by the windmill 30 is the same, it is important to reduce air losses and improve the efficiency of the wind received.

The horizontal axis type wind power generation mechanism 12 of this example has the bell mouth duct and the spinner 21, and the blade 322 has a short diameter and the blades overlap each other. By narrowing the interval between the bell mouth duct 23 and the blade 322, almost all of the wind receiving area of the horizontal axis type wind power generation mechanism 12 becomes the area of the blades 32, and thus the most efficient wind reception is possible. As a result, high-speed rotation can be achieved. Noise can be reduced by the short blade diameter and a gap with respect to the narrow bell mouth duct 23.

### (3) Third Embodiment (Integrated Type Wind Power Generation Mechanism 13)

An integrated type wind power generation mechanism 13, which is a third embodiment of the present invention, will be described with reference to FIGs. 6 to 10. In the third embodiment, in principle, the same reference numerals are given to the similar components as in the first embodiment and the second embodiment, and detailed description thereof will be omitted.

As illustrated in FIGs. 6 to 10, in the third embodiment, a difference is that the wind power generation mechanism is a wind power generation mechanism in which the vertical axis type wind power generation mechanism 11 of the first embodiment and the horizontal axis type wind power generation mechanism 12 of the second embodiment are combined and integrated.

Hereinafter, the wind power generator 1 of the third embodiment may be referred to as "integrated type", "integrated type wind power generation mechanism 13", or "integrated type wind power generation mechanism 13" in the specification.

As for the integrated type wind power generation mechanism 13, the description of each of the vertical axis type wind power generation mechanism 11 and the horizontal axis type wind power generation mechanism 12 is as described above, so it will be omitted to avoid duplication, and the necessary description will be described in detail below.

In addition, although in the vertical axis type wind power generation mechanism 11 of the first embodiment, as an example, the disk-shaped arm 35 is adopted in a windmill portion, the vertical axis wind type power generation mechanism 11 part of the integrated type wind power generation mechanism 13 described below differs in that, as an example, a rod-shaped arm is used in the windmill portion.

### (Overall Shape)

FIG. 6 is a cross-sectional explanatory view illustrating a state in which the integrated type wind power generation mechanism 13 is installed horizontally, viewed from a lateral side, and illustrating the internal structure.

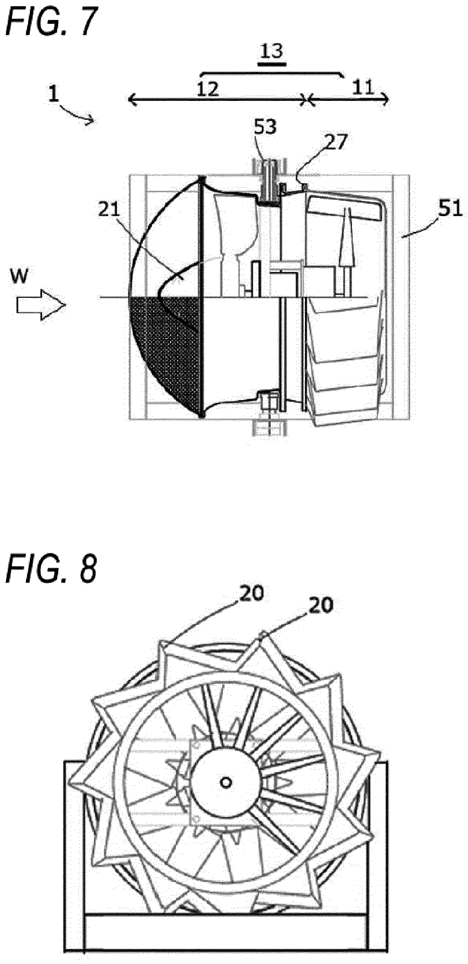

FIG. 7 is a plan view, half of which is an illustration of the inside.

FIG. 8 is a rear view of the integrated type wind power generation mechanism 13.

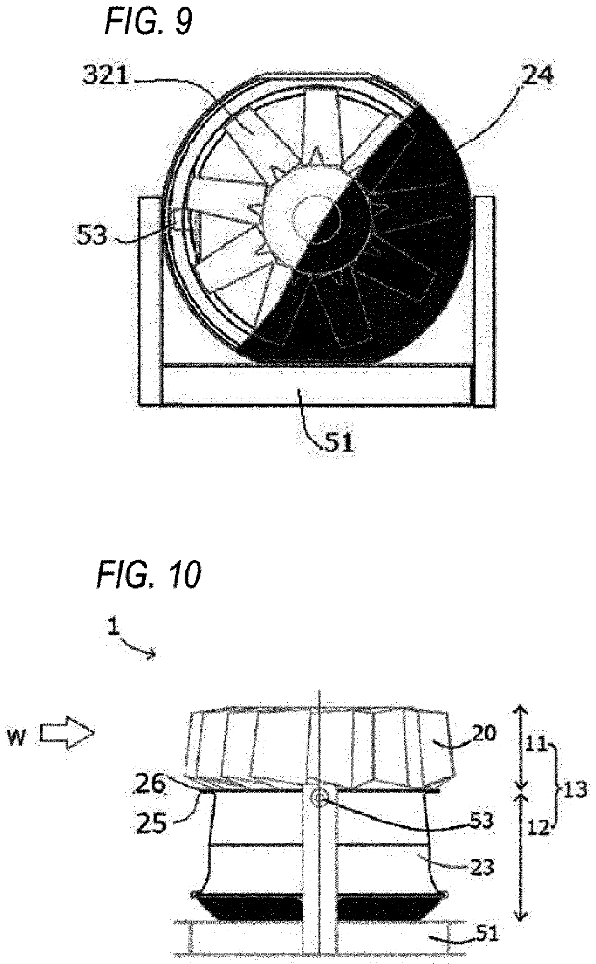

FIG. 9 is a front view of the integrated type wind power generation mechanism 13.

FIG. 10 is a side view of the integrated type wind power generation mechanism 13 installed vertically.

The integrated type wind power generation mechanism 13 of the present invention includes the mount 51, the vertical axis type wind power generation mechanism 11, and the horizontal axis type wind power generation mechanism 12. The integrated type wind power generation mechanism 13 uses a wind power generation mechanism in which the vertical axis type wind power generation mechanism 11 and the horizontal axis type wind power generation mechanism 12 are integrated as a wind power generation mechanism.

That is, as illustrated in FIG. 6, in the integrated type wind power generation mechanism 13, a horizontal axis type windmill rear end portion 26 of the horizontal axis type wind power generation mechanism 12 and a vertical axis type windmill bottom end portion 25 of the vertical axis type wind power generation mechanism 11 are connected by a connecting member 27 to be integrated.

The integrated type wind power generation mechanism 13 is integrated in a form in which the horizontal axis type wind power generation mechanism 12 is arranged in front and the vertical axis type wind power generation mechanism 11 is arranged in the rear, and the integrated type wind power generation mechanism 13 can be used by mounting the horizontal axis type wind power generation mechanism 12 on a moving body so as to face a traveling direction of the moving body.

As illustrated in FIG. 7, the integrated type wind power generation mechanism 13 is attached to the mount 51 by the attitude control shaft 53 which is the attitude control means capable of adjusting the direction of the integrated type wind power generation mechanism 13 vertically and horizontally.

FIGs. 6 and 7 illustrate a state in which the wind power generator 1 of the integrated type wind power generation mechanism 13 is installed in a horizontal state such that the horizontal axis type wind power generation mechanism 12 part receives the wind W. FIG. 10 illustrates a state in which the vertical axis type wind power generation mechanism 11 part of the integrated type wind power generation mechanism 13 is installed vertically so as to receive the wind W.

In the integrated type wind power generation mechanism 13 illustrated in FIG. 6, the windmill 30 of the vertical axis type wind power generation mechanism 11 employs the blades 321 supported by spokes 39.

Further, both the vertical axis type wind power generation mechanism 11 and the horizontal axis type wind power generation mechanism 12, the generators A40a and A40b are directly connected to windmill rotation shafts 31a and 31b, respectively.

In this example, the windmill rotation shaft 31 is formed with the same rotating shaft as the rotation shaft of the generator 40a, but the windmill rotation shaft 31 may be joined to the rotation shaft of the generator 40a with a shaft coupling.

### (Mount 51 - Left and Right)

The integrated type wind power generation mechanism 13 can arbitrarily change an orientation in a horizontal direction by the mount 51 to realize the most efficient power generation. That is, by installing a turntable (not illustrated) on the mount 51, it is possible to arbitrarily change the orientation in the horizontal direction by rotating the turntable so as to face a wind direction. In addition, by attaching a vertical stabilizer (stabilizer) (not illustrated) on the upper portion of the integrated type wind power generation mechanism 13, the integrated type wind power generation mechanism 13 of the integrated type wind power generator of the present invention can automatically face the wind for efficient power generation.

### (Mount 51 - Up and Down)

In addition, the integrated type wind power generation mechanism 13 can change an installation angle in a vertical direction by the attitude control shaft 53 of the mount 51, so the integrated type wind power generation mechanism 13 can be oriented parallel to the ground or angled from the horizontal.

As a result, the integrated type wind power generation mechanism 13 in the horizontal state as illustrated in FIG. 6 can be tilted rearward 90 degrees to change its orientation to the vertical state as illustrated in FIG. 10. Further, by installing a turntable on the mount, it is possible to rotate the integrated type wind power generation mechanism 13 180 degrees, so the integrated type wind power generation mechanism 13 can face the wind direction.

Although the wind power generator 1 of the present invention configured as described above is not strictly limited in size and weight, preferably, the wind power generator 1 is less than approximately 1 meter in length, width, and height and weighs less than approximately 30 kilograms to 50 kilograms. Therefore, the small-sized wind power generator of the present invention can be installed not only in a stationary state to generate wind power, but also in a moving body such as an automobile, a ship, or an aircraft to generate wind power.

### (When Mounted on Moving Body and Moved)

When traveling with the integrated type wind power generation mechanism 13 installed on a moving body such as an automobile, a ship, or an aircraft, the wind direction is constant only from the traveling direction. In this case, the horizontal axis type wind power generation mechanism 12 in which the entire windmill receives wind and generates power operates efficiently. Therefore, when the moving body moves forward, the integrated type wind power generation mechanism 13 is placed in a horizontal state so that the horizontal axis type wind power generation mechanism 12 is oriented parallel to the ground. As a result, the integrated type wind power generation mechanism 13 of the present embodiment can efficiently generate power when a moving object is travelled with the integrated type wind power generation mechanism 13 installed thereon.

### (Spoke Blade 38 Rotating Blade)

In the integrated type wind power generation mechanism 13 of this embodiment, as illustrated in the vertical axis type wind power generation mechanism 11 part of FIG. 6, the rotating blade-shaped spoke blade 38 may be formed on an arm connecting the windmill rotation shaft 31 and the blade 321, or the shape of the arm connecting the windmill rotation shaft 31a and the blade 321 can be formed into the spoke blade 38 having the shape of a rotating blade.

As a result, in the integrated type wind power generation mechanism 13 of this embodiment, the wind W passes through the inside of the horizontal axis type wind power generation mechanism 12 and flows into the vertical axis type wind power generation mechanism 11 as it is, so that the spoke blades 38 of the vertical axis type wind power generation mechanism 11 can be given a rotational force.

Therefore, even when the integrated type wind power generation mechanism 13 is mounted on a moving body such as an automobile and the moving body is traveling, the vertical axis type wind power generation mechanism 11 of the integrated type wind power generation mechanism 13 can generate power without rest. As a result, favorable power generation efficiency can be obtained.

### (When Moving Body is Stopped)

When the moving body is stopped as in the case of arriving at a destination, the attachment angle of the integrated type wind power generation mechanism 13 is changed so as to tilt the integrated type wind power generation mechanism 13 in the horizontal state rearward 90 degrees to change its orientation to a vertical state as illustrated in FIG. 10, and by making the integrated type wind power generation mechanism 13 vertical so that the vertical axis type wind power generation mechanism 11 can receive the wind W efficiently, the integrated type wind power generation mechanism 13 can efficiently generate power.

Therefore, the wind power generator 1 of the third embodiment of the present invention can effectively generate power even when the direction of the wind is not constant, such as when the moving body is stopped.

In the wind power generator 1 of the third embodiment of the present invention, as illustrated in FIG. 10, the horizontal axis type wind power generation mechanism 12 is connected to a lower portion of the vertical axis type wind power generation mechanism 11. However, it is also possible to turn the horizontal axis type wind power generation mechanism 12 up and the vertical axis type wind power generation mechanism 11 down. In this case, the multi-blade fan of the horizontal axis type wind power generation mechanism 12 faces upward.

### (Simultaneous Power Generation)

As described above, in the wind power generator 1 of the third embodiment of the present invention, when the horizontal axis type wind power generation mechanism 12 generates power while a moving body such as an automobile is moving, the vertical axis type wind power generation mechanism 11 located behind the horizontal axis type wind power generation mechanism 12 can also generate power at the same time.

That is, in this example, as illustrated in FIG. 6, the spoke blade 38 is formed on a rod-shaped arm that connects the windmill rotation shaft 31 and the blade 321 of the vertical axis type wind power generation mechanism 11, and the shape of the spoke blade 38 is a rotating blade shape. Therefore, a total amount of wind that has passed through the horizontal axis type wind power generation mechanism 12 passes through the inside of the vertical axis type wind power generation mechanism 11 and rotates the spoke blades 38 provided in the vertical axis type wind power generation mechanism 11, enabling power generation.

### (Other Equipment)

In order to ensure functioning of these mechanisms, a vertical stabilizer for controlling the direction can be attached to the upper portion of the bell mouth duct 23 of the horizontal axis type wind power generation mechanism 12. That is, when a turntable (not illustrated) is installed on the mount 51, by attaching a stabilizer (not illustrated) to the upper portion of the integrated type wind power generation mechanism, it is possible to directly change the orientation in the horizontal direction by rotating the turntable to face the wind direction. Therefore, it is possible to efficiently generate power.

### (Generator)

In the wind power generator 1 of the third embodiment of the present invention, the generators A40a and A40b are respectively fixed in the vertical axis type wind power generation mechanism 11 and the horizontal axis type wind power generation mechanism 12 using the generator support means. The generators A40a and A40b are respectively directly connected to the windmill rotation shaft 31a and the windmill rotation shaft 31b, and can independently generate power by the rotational forces generated by the blades 321 and 322.

In this case, it is preferable that the windmill rotation shaft 31a is integrated with and directly connected to a rotation shaft 41a of the generator 40a as in this example. For example, it is preferable that the windmill rotation shaft 31b of the horizontal axis type wind power generation mechanism 12 and the windmill rotation shaft 31a of the vertical axis type wind power generation mechanism 11 be respectively formed of the same rotating shafts as the rotation shafts 41b and 41a of the generator 40b and the generator 40a, or the windmill rotation shaft 31b and the windmill rotation shaft 31a be respectively joined to the rotation shaft 41b of the generator and the rotation shaft 41a of the generator by shaft couplings. By joining with the shaft couplings, it is possible to absorb misalignment and transmit power without applying an extra load to the motor and the windmill.

Although various generators can be used in the wind power generator 1 of the third embodiment of the present invention, it is preferable to use the generator 40 according to the characteristics of the windmill 30 so that the vertical axis type wind power generation mechanism 11 uses a low wind speed generator and the horizontal axis type wind power generation mechanism 12 uses a high wind speed generator.

In particular, the generator attached to the horizontal axis type wind power generation mechanism 12 preferably uses an alternator, which is an AC generator for a vehicle. Since alternators are widely used in vehicles, ships, and the like, they are easy to handle and maintain, and since there are many rebuilt products, they can contribute to a recycling-oriented society.

Moreover, although two generators 40 are installed in the example illustrated in FIG. 6, as will be described below, it is also possible to install only one of them and directly connect it to the windmill rotation shaft 31a and the windmill rotation shaft 31b.

### (Windmill Rotation Shaft 31)

In the third embodiment of the present invention, the windmill rotation shaft 31b of the horizontal axis type wind power generation mechanism 12, the generator 40b, the generator 40a, and the windmill rotation shaft 31a of the vertical axis type wind power generation mechanism 11 are formed on the same axis, and two generators, the generator 40b and the generator 40a, are installed.

Another example of another third embodiment of the present invention could be a single generator. That is, one of the generator 40b and the generator 40a can be omitted and the windmill rotation shaft 31b of the horizontal axis type wind power generation mechanism 12, the rotation shaft of the generator, and the windmill rotation shaft 31a of the vertical axis type wind power generation mechanism 11 can be a single rotation shaft. This enables cost reduction and weight reduction.

### (Independent Use)

The wind power generator 1 of the present invention is not limited to use in the integrated type wind power generation mechanism 13, and the portion of the vertical axis type wind power generation mechanism 11 and the portion of the horizontal axis type wind power generation mechanism 12 can also be separated and used independently. However, in order to provide products at lower prices, three types of the integrated type wind power generation mechanism 13, the vertical axis type wind power generation mechanism 11, and the horizontal axis type wind power generation mechanism 12 are prepared, and it is convenient to select one of the types according to the application.

### (Others)

Since the wind power generator 1 of the present invention has a very simple structure and does not require parts such as a brake sensor, the number of parts can be reduced, so that it can be manufactured at low cost.

### (Application Example)

As an application example of the present invention, the integrated type is suitable for a ship or the like because sea breeze can be expected even when the ship is stopped. The horizontal axis type is preferable when it is mounted on an automobile such as a long-distance truck. In addition, the integrated type can be effectively used for vehicles that assume disasters and vehicles used for camping or the like, and the vertical axis type can be effectively used when installing in a place with good wind conditions such as along the coast. However, in either case, each type of wind power generator can be used.

When using each type independently, it becomes a mechanism to attach the generator 40 to each of the vertical axis type wind power generation mechanism 11 and the horizontal axis type wind power generation mechanism 12.

Moreover, when a high-performance generator is developed, it is also possible to install and use only the vertical axis type wind power generation mechanism 11 in a truck or the like.

### (Charge Control Mechanism)

Moreover, a charge control mechanism can be further provided for charging a battery mounted on a moving body or a spare battery for replacement with the electricity generated by the wind power generator of the present invention. Such charge control mechanisms include, for example, power generation control system devices. This is a battery device that controls the battery charging by controlling alternator voltage in response to changes in the windmill rotation speed.

In the power generation control system device, by using a microcomputer to control the voltage generated by the alternator to be lowered when the moving body is moving at a constant speed and to control the generated voltage to be increased when the moving body is decelerating, the load on the windmill due to the alternator power generation can be reduced, enabling efficient power generation.

### (Vertical Connection of Windmill 30)

When the vertical axis type wind power generation mechanism 11 is used alone, it is effective to connect the vertical axis type windmills 30 in two or three stages in a comb shape as a measure for increasing the amount of power generation. In the present invention, since the windmill 30 has a large blade area and a large rotational torque, a form in which one generator 40 is provided for a plurality of windmills 30 is possible.

### (Automatic Attitude Control of Integrated Type Wind Power Generation Mechanism 13)

By attaching a gas damper and a gas spring to the mount 51 and the wind power generator, the integrated type wind power generator of the present invention can automatically control the vertical/horizontal altitude of the integrated type wind power generation mechanism 13.

For example, by attaching one end of the gas damper to the mount 51 and the other end (rod portion) of the damper to the integrated type wind power generation mechanism 13, it is possible to automatically control the vertical/horizontal attitude of the integrated type wind power generation mechanism 13 according to when the moving body moves or stops.

Preferably, the gas damper is attached between the mount 51 and the vertical axis type wind power generation mechanism 11.

That is, first, when the moving body is in a stationary state, a rod of the gas damper is fully extended (in this state, the integrated type wind power generation mechanism 13 is in a vertical state as illustrated in FIG. 6). Then, when the moving body starts traveling, the wind pressure hitting the integrated type wind power generation mechanism 13 increases, and due to this wind pressure, the rod of the gas damper attached to the integrated type wind power generation mechanism 13 is automatically pushed into a damper cylinder and contracted (as a result, the attitude of the integrated type wind power generation mechanism 13 becomes horizontal as illustrated in FIG. 10).

Then, when the moving body stops traveling, the wind pressure disappears, so the rod of the gas damper rebounds and stretches again, pushing up to raise the integrated type wind power generation mechanism 13 at a tip portion of the rod of the gas damper. As a result, the integrated type wind power generation mechanism 13 returns to the vertical state as illustrated in FIG. 6.

As the gas damper, for example, a lightweight gas damper used for opening and closing hatchbacks of automobiles is preferably used. A gas spring, an oil damper, or the like can also be used in addition to the gas damper.

The present invention is not limited to the above-described embodiments, and it goes without saying that various modifications can be made without departing from the gist of the present invention.

### REFERENCE SIGNS LIST

1 wind power generator
11 vertical axis type wind power generation mechanism 11
12 horizontal axis type wind power generation mechanism 12
13 integrated type wind power generation mechanism 13
20 wind collector
21 spinner
22 intake
23 bell mouth duct
24 guard
25 vertical axis type windmill bottom end portion
26 horizontal axis type windmill rear end portion
27 integrated connecting member
30 windmill portion
31 windmill rotation shaft
31a windmill rotation shaft of vertical axis type windmill
31b windmill rotation shaft of horizontal axis type windmill
32 blade
321 blade of first embodiment
322 blade of second embodiment
33 winglet
34 inner blade
35 disk-shaped arm
36 rod-shaped arm
37 stay
38 spoke blade
39 spoke
40 generator
40a generator A
40b generator B
41 generator rotation shaft
41a generator rotation shaft of vertical axis type windmill
41b generator rotation shaft of horizontal axis type windmill
51 mount
53 attitude control shaft
65 wind receiving portion
66 headwind portion
67 rear part
R rotation direction
W wind direction

## Claims

1. A wind power generator that includes a wind power generation mechanism including (A) to (D) that follow and a support mechanism including (G) to (H) that follow,
wherein the wind power generation mechanism includes:
(A) a wind collector;
(B) a windmill with a plurality of blades;
(C) a windmill rotation shaft; and
(D) a generator,
wherein the wind power generation mechanism is a vertical axis type wind power generation mechanism,
wherein the wind collector is formed from a plurality of wind collecting ducts that surround an outer circumference of the windmill,
wherein the wind collecting duct is formed such that a wind discharged from an outlet of the wind collecting duct always hits the blade of the windmill as a favorable wind, and is formed such that an unfavorable wind for the blade is blocked by a duct wall of the wind collecting duct in order not to flow into the windmill,
wherein the generator is directly connected to the windmill rotation shaft,
wherein the support mechanism includes:
(G) a mount; and
(H) an attitude control means provided on the mount,
wherein the attitude control means is an attitude control means that allows an orientation adjustment of the windmill and the wind collector in at least a vertical direction out of horizontal and vertical directions, and
wherein the wind power generator installed in a stationary state enables to generate power, or the wind power generator fixedly installed on a moving body enables to generate power.

2. The wind power generator according to claim 1,
wherein the wind collecting duct is formed such that an inner diameter of the wind collecting duct decreases from an intake of the wind collecting duct to the outlet of the wind collecting duct.

3. The wind power generator according to claim 1, further comprising:
a horizontal axis type wind power generation mechanism in which a wind collector is a bell mouth duct and a windmill is a multi-blade fan horizontal axis type windmill.

4. The wind power generator according to claim 1,
wherein a rear end portion of the horizontal axis type wind power generation mechanism according to claim 3 is detachably connected to a lower end portion of the vertical axis type wind power generation mechanism.

5. The wind power generator according to claim 4,
wherein the orientation adjustment is enabled by the attitude control means according to claim 1 such that the horizontal axis type wind power generation mechanism faces a wind direction when the wind power generator is installed on a moving body and the moving body travels, and the vertical axis type wind power generation mechanism is vertically oriented with respect to the wind direction when the moving body is stopped.

6. The wind power generator according to claim 5, further comprising:
a charge control mechanism that charges a battery mounted on the moving body with electricity generated by the wind power generator.

7. The wind power generator according to claim 4,
wherein in terms of width and length of the blades of the multi-blade fan horizontal axis type windmill, the blades are formed to have a blade width such that the blades overlap each other and cover almost all of a wind receiving portion when the windmill is viewed from a windmill rotation shaft direction, and the length of the blade is formed such that there is almost no gap between a tip of the blade and the bell mouth duct when the windmill is viewed from the windmill rotation shaft direction.

8. The wind power generator according to claim 4,
wherein a rotating blade-shaped member is formed on a rod-shaped arm that connects the windmill rotation shaft and the blades of the vertical axis type wind power generation mechanism according to claim 1.

9. The wind power generator according to claim 3 or 4,
wherein a protective cover is provided at a wind collecting port of the wind collector to prevent a finger from getting caught and to prevent a bird strike.
